# EUROPEAN PATENT APPLICATION

(11) **EP 4 553 620 A1**
(43) Date of publication of application: **14.05.2025**
(21) Application number: 24210951.0
(22) Date of filing: 05.11.2024
(51) Int. Cl.: G06F 3/01, A63F 13/20, G06T 19/00, A63F 13/847

(54) **COMPUTER IMPLEMENTED METHOD AND SYSTEM**

(30) Priority: 10.11.2023 GB 202317306
(71) Applicant: Sony Interactive Entertainment Europe Limited, London W1F 7LP (GB)
(72) Inventor: LEYTON, Pedro Federico Quijada, London, W1F 7LP (GB); KEYS, Owen Bruce, London, W1F 7LP (GB); SANDERS, Ashley John, London, W1F 7LP (GB); VISCIGLIA, Aron Giuseppe, London, W1F 7LP (GB)
(74) Representative: Murgitroyd & Company

(57) **Abstract**

A method and system are provided which enables objects to be shared across instances of augmented reality environments.

## Description

### FIELD

The present invention relates to a computer-implemented method and system. Particularly, but not exclusively, the present invention relates to a computer-implemented method of transferring an object between a plurality of augmented reality environments.

### BACKGROUND

Augmented reality environments are becoming increasingly popular for enabling content to be consumed by multiple parties across multiple locations. Two or more individuals may share the same environment and see visual representations of each other inside the augmented reality environments.

There are, however, limitations on the collaboration which can take place and this can limit the utility of these environments.

Aspects and embodiments are conceived with the foregoing in mind.

### SUMMARY

Viewed from a first aspect, there is provided a computer implemented method of enabling an object to be shared between a plurality of augmented reality environments. The object may be a virtual object (e.g. a content stream) or a physical object (e.g. a games controller). Each of the plurality of augmented reality environments may be implemented by or via a respective computing device. Such a computing device may be an augmented reality headset. The plurality of augmented reality environments may comprise a plurality of visual aspects in common. The augmented reality environments may be instances of the same computer-implemented entertainment environment.

The method implemented by a processing resource. The processing resource may be hardware or software implemented. The processing resource may be cloud implemented. The processing resource may be any resource which can provide processing capacity. The processing resource may be a computing device which implements one of the plurality of augmented reality environments.

The method may comprise receiving input requesting that an object in a first augmented reality environment is transferred to at least one further augmented reality environment. The object may be a physical (e.g. a games controller) or virtual object (e.g. a content stream). The input may be received by a suitably configured user interface and may be provided in the form of text or voice input. The input may be received via a gesture input. The at least one further augmented reality environment may share a plurality of visual aspects with the first augmented reality environment. The at least one further augmented reality environment may be identical to the first augmented reality environment.

The method may comprise identifying the object and the at least one further augmented reality environment. The identification of the object may scan the object, in its physical form, and generate object scan data corresponding to the object. The object scan data identifies the geometry and size of the object.

The method may, based on the identification of the object and the at least one further augmented reality environment, generate rendering data for the object. The rendering data enables a visual representation of the object to be rendered in an augmented reality environment.

Where the object is a physical object, such as, for example, a games controller, identification of the object may comprise scanning the object using a standard technique such as, for example, simultaneous location and mapping (SLAM) techniques. The scanning of the object generates data in a format which is suitable for rendering three-dimensional volumes in an augmented reality environment. Example formats include obj format, fbx format, usd format and stl format.

The processing resource may limit the size of the physical object which is scanned and thus limit the size of the object for which rendering data may be generated. The limitation may be by volume of the scanned object. If the scanning of the object determines that the object exceeds a volume threshold, then the processing resource may reject the request to transfer the object from the first augmented reality environment to the at least one further augmented reality environment.

Responsive to the input requesting transfer of the object and/or responsive to the identification of the object, the processing resource may initialise a user interface in the first augmented reality environment which requests confirmation of the transfer.

The user interface may comprise a prompt which requires selection of an option confirming the transfer. The user interface may comprise a portal which is delineated inside the first and/or further augmented reality environments. The colour and/or dimensions of the portal may be determined by a user profile associated with the first and/or further augmented reality environment. The colour and/or dimensions of the portal may be determined by the maximum size of the object to be scanned.

The user input confirming the request to transfer the object may comprise a hand motion which comprises the user using their hand to grab the object and move it toward the portal. The visual representation of the scanned object, rendered in the environment so that it is co-located with the physical object, may then be re-rendered in corresponding locations as the physical object is moved toward the portal.

The method may provide the rendering data to the at least one further augmented reality environment. This may be implemented by any suitable telecommunications technique or protocol. The object may then be rendered in the at least one further augmented reality environment.

A method in accordance with the first aspect enables an object to be identified and transferred between augmented reality environments.

Optionally, the input may comprise a request to transfer functionality associated with the object to the at least one further augmented reality environment and the method further comprises transferring the functionality associated with the object to the at least one further augmented reality environment.

The technical effect of this is that functionality associated with an object may be transferred between augmented reality environments. For example, a games controller in a first environment may be used to provide input to a gaming environment and that functionality may then be transferred to the games controller in the at least one further augmented reality environment.

Optionally, the functionality may comprise control over input to a computer-implemented entertainment environment implemented using the respective augmented reality environments. The computer implemented entertainment environment may comprise a gaming environment which is being used to play a video game. Alternatively or additionally, the computer implemented entertainment environment may provide a content stream which is being used to view multimedia content. The input may correspond to control over the streamed content.

Optionally, generating rendering data for the object may comprise:
processing data associated with the object; and
generating data in a format suitable for rendering in the at least one further augmented reality environment;
combining the data suitable for rendering in the least one further augmented reality environment with data identifying the at least one further augmented reality environment.

Optionally, the data associated with the object comprises data associated with functionality of the object.

Viewed from a second aspect, there is provided a method of transferring an object between augmented reality environments. The object may be a virtual object (e.g. a content stream) or a physical object (e.g. a games controller)

Each of the augmented reality environments may be implemented by or via a respective computing device. Such a computing device may be an augmented reality headset. The plurality of augmented reality environments may comprise a plurality of visual aspects in common. The augmented reality environments may be instances of the same computer-implemented entertainment environment.

The method may implemented by a processing resource. The processing resource may be hardware or software implemented. The processing resource may be cloud implemented. The processing resource may be any resource which can provide processing capacity.

The method may comprise receiving input via a user interface requesting transfer of an object from a first augmented reality environment to at least one further augmented reality environment.

The method may comprise identifying the object to be transferred. This may be corresponding to a user input comprising a wake or trigger word to identify the object.

The method may comprise generating a request for the object to be transferred to the at least one further augmented reality environment.

The method may comprise transmitting the request for the object to be transferred to the at least one further augmented reality environment. The request may be transferred to a processing resource configured to implement a method in accordance with the first aspect.

A method in accordance with the first aspect may enable an item to identify an object which is to be transferred to another augmented reality environment and providing a request enabling that to happen.

The input may comprise identification of at least one user corresponding to the at least one further augmented reality environment. The identification may be implemented via a user interface.

The object may be a physical object where the method may further comprise scanning the object to generate object scan data corresponding to the object. The scan data may identify the shape and size of the object so that a bounding box may be generated which can be used to track the object in the augmented reality environment.

The method may further comprise generating a visual representation for the object. The visual representation may be determined by the content rendered within the augmented reality environment or determined by a user profile associated with one of the plurality of augmented reality environments.

A system, computer readable medium (which may be a non-transitory computer readable medium) and computer program may also be provided in accordance with any of the first or second aspects.

### DESCRIPTION

An embodiment will now be described, by way of example only, and with reference to the following drawings in which:
Figure 1 illustrates an example system which may be used to implement an embodiment;
Figure 1a schematically illustrates a computing device which may be used to implement an embodiment;
Figure 2 illustrates a scene where an individual shares an object with a representation of an individual in the same augmented reality environment;
Figure 3 illustrates the flow of steps involved of a method of enabling an individual to share an object in an augmented reality environment with another individual; and
Figure 4 illustrates another flow of steps involved of a method of enabling an individual to share an object in an augmented reality environment with another individual.

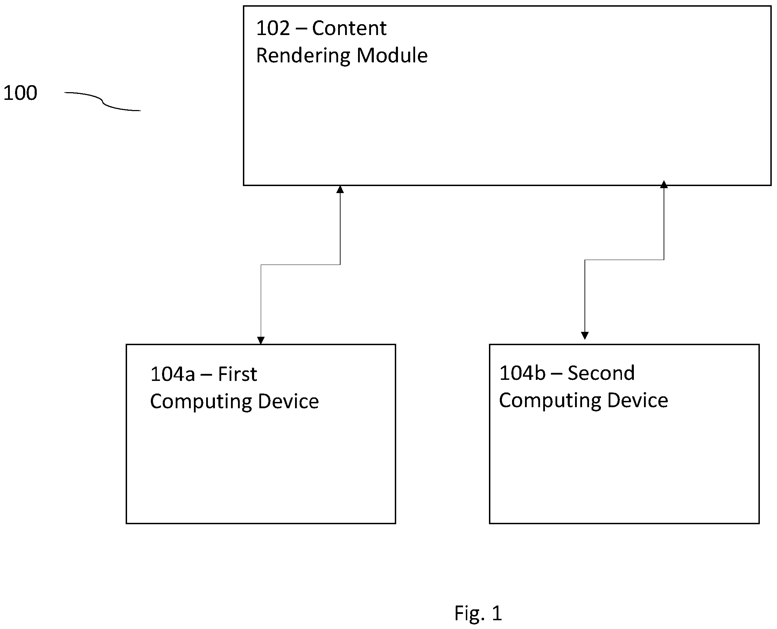

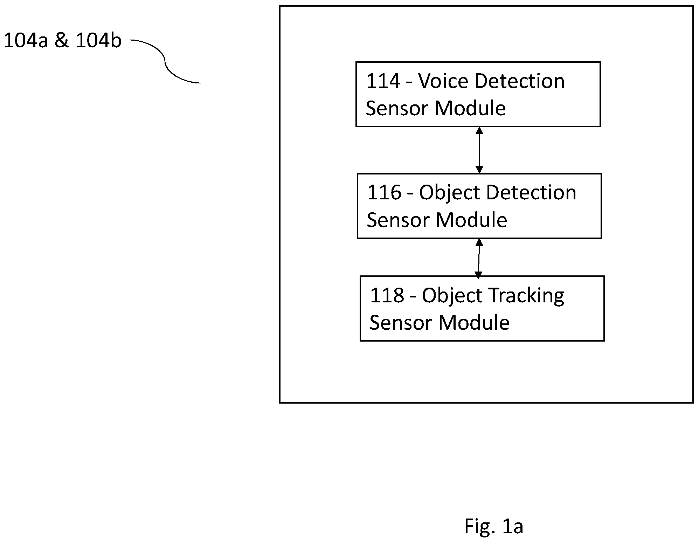

We now describe, with reference to Figure 1, a system 100 which may be used to implement an embodiment. The system comprises a content rendering module 102 which is configured to provide the content to first computing device 104a and second computing device 104b. Each of the first computing device 104a and the second computing device 104b is configured to implement an augmented reality environment using the content provided by the content rendering module 102. The augmented reality environments implemented may be distinct in that they contain distinct visually generated objects or they may be instances of the same computer generated augmented reality environment. The example below discusses embodiments and examples where the users are using instances of the same computer generated augmented reality environment in that the instances have computer-generated visual aspects in common. However, the described subject matter may be applied where the users are using the respective computing devices to implement distinct augmented reality environments. The users may use a common computer-generated augmented reality environment during game play or another form of computer generated entertainment where two or more users may consume the same content.

First computing device 104a and second computing device 104b may each be configured using suitable software to operate a voice detection sensor module 114, an object detection sensor module 116 and an object tracking sensor module 118. Each of these modules are configured to transfer data between one another using any suitable data communication technique or protocol. These computing devices are illustrated schematically in Figure 1a.

Each of the computing devices comprises a central processing unit (CPU) which is operative to execute instructions provided by respective computer program code.

The voice detection sensor module 114 is configured to detect and interpret voice input from the respective user using standard voice recognition technology. This may be in the form of a command comprising a wake- or trigger-word which identifies a command to be implemented by the respective computing device. The voice detection sensor module 114 is configured to interpret the voice input and identify a corresponding command which may be used to trigger functionality of either or both of the object detection sensor module 116 or the object tracking sensor module 118.

The object detection sensor module 116 may be configured to deploy simultaneous location and mapping (SLAM) technology to scan an object which has been identified by the respective user using, for example, a voice command or a gesture command. The object detection sensor module 116 may generate bounding box data which can be used to generate a visual representation of the scanned object. The visual representation may comprise an animation which can then be associated with the scanned object in the augmented reality environment. The visual representation may then be rendered by the respective computing device in the augmented reality environment. That is to say, the object detection sensor module 116 may scan an object and use the data generated from the scan to a render a three-dimensional model which can then be used to graphically represent the object in the augmented reality environment.

The object tracking sensor module 118 may then track the object and provide commands to the computing device to render the visual representation of the object to that it appears to be collocated with the physical object. In simpler terms, this will cause the visual representation to appear to follow the object in the augmented reality environment.

The computing devices may also implement standard hand and gesture tracking techniques to enable hand motion and gestures to be tracked and registered as an input, i.e. selection of an option on a menu rendered in the augmented reality environment by the respective computing device.

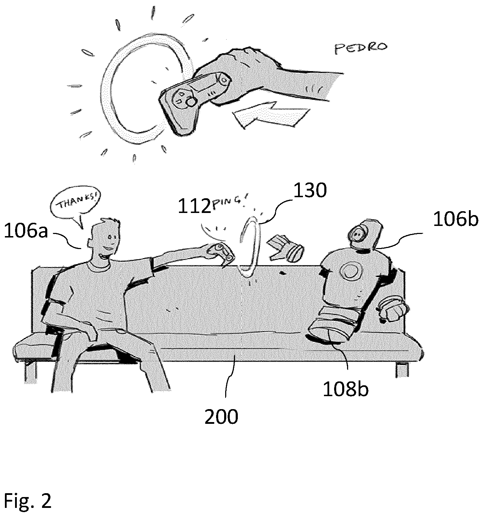

Figure 2 illustrates an example of such an augmented reality environment. Each of users 106a and 106b are sharing an augmented reality environment using respective first computing device 104a and second computing device 104b. For example, first computing device 104a may be an augmented reality headset donned by user 106a and second computing device 104b may be an augmented reality headset donned by user 106b.

Within the augmented reality environment, user 106a may be graphically represented in the form of an avatar 108a which is shown in Figure 2. Similarly, user 106b may be graphically represented in the form of an avatar 108b which is shown in Figure 2. That is to say, when user 106a dons the first computing device 104a to view the augmented reality environment, they will see the graphical representation of user 106b and vice versa when user 106b dons the second computing device 104b. In the example above, a graphical representation of user 106b, e.g. avatar 108b, is sat to the left of a graphical representation of user 106a. Figure 2 shows user 106a sat on a sofa 200 in their physical environment and the graphical representation of user 106b is sat to his left.

The example in Figure 2 is merely illustrative of an augmented reality environment which may be implemented by the content streaming module 102 and shared by first user 106a and second user 106b when they respectively don the headsets provided by respective first computing device 104a and second computing device 104b.

Physical objects are present in the surrounding environments of both users and they may want to pass those objects to the other user whilst they are sharing the augmented reality environment.

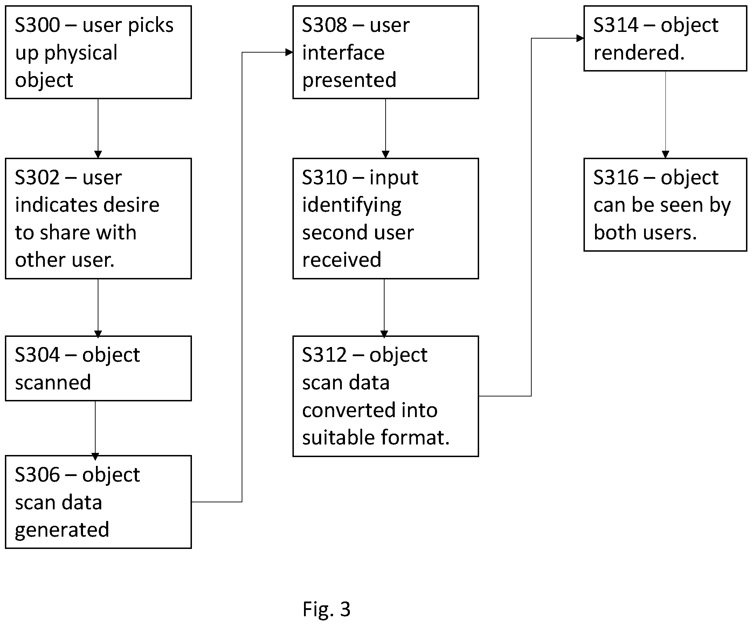

We will now describe how a games controller 112 (as an example of a physical object) can be shared between first user 106a and second user 106b during use of respective first computing device 104a and second computing device 104b. This is described with reference to Figure 3.

In a step S300, first user 106a picks up a games controller 112 in their physical environment. The games controller 112 may be being used by first user 106a to provide input into a gaming session. i.e. during game play. The second user 106b may also be playing the same game in the same gaming session. The input may be registered by a gaming console in communication with the games controller 112 and interpreted as a corresponding input into a gaming environment which is implemented using the content provided by content rendering module 102. Alternatively or additionally, the input into the games controller 112 may also be registered by the first computing device 104a and this may be used to provide input into a gaming environment implemented using the content provided by the content rendering module 102.

In a step S302, the first user 106a provides a user input to indicate that they would like to share this object with second user 106b. This user input may be in the form of a voice command which is detected by the voice detection sensor module 114 of the computing device 104a. The voice command may be a specific command which comprises a wake-word such as "share" and then another command which identifies where the system can find the object such as "exterior object" and how user 106a is identifying that object such as "in left hand" (as shown in Figure 2). Alternatively, the user 106a may provide input in the form of a selection from a menu to indicate a desire to share an object in the left (or right hand). Other forms of user input are also possible. The input indicating the desire to share the object with user 106b may be described as a handover input as it is input which indicates a desire to hand a representation of the physical object over to second user 106b.

In a step S304, the object detection sensor module 116 of the computing device implements a simultaneous location and mapping (SLAM) technique to scan the games controller in the left hand of user 106a.

The scanning of the games controller 112 generates object scan data which can be used to render a graphical representation of the games controller 112 inside the augmented reality environment. This is step S306.

The scanning of the object generates scan data in a format which is suitable for rendering three-dimensional volumes in an augmented reality environment. Example formats include obj format, fbx format, usd format and stl format. The scan data can then be transmitted to the content rendering module 102 in a format which enables the graphical representation of the scanned object to be rendered in another augmented reality environment. The format which is suitable for rendering a visual representation in an augmented reality environment will be determined by the rendering engine used by the software and/or the computing device which is implementing the augmented reality environment.

The scan data identifies the shape and geometry of the games controller 112 to enable a bounding box to be generated for that object in an augmented reality environment. This can be used to generate a graphical representation of the games controller. The graphical representation may comprise an animation which may be rendered around the games controller 112. The graphical representation may be rendered in a colour or using a theme which is specified by a user profile associated with the user 106a. The graphical representation may also be determined by the content in the augmented reality environment e.g. where the content is a particular game title, the graphical representation may be linked to that game title.

The object tracking sensor module 118 tracks the movement of the games controller 112 and the graphical representation is synchronised with the movement of the games controller so that the graphical representation of the games controller generated by the scan in step S304 appears in the same location as the games controller 112.

On completion of the scan of the games controller 112, a user interface may be presented in a step S308 which asks the user to confirm where the games controller is to be shared. The user interface may list the other users who are sharing the augmented reality environment, such as second user 106b. First user 106a may select second user 106b from the options provided by the user interface and the selection may be tracked using standard hand-tracking techniques. The user interface may provide other options such as groups of friends who the user frequently shares an augmented reality environment with. Other forms of user input may be used to indicate where the object is to be shared. For example, voice input may be used to identify a user with which the games controller is to be shared.

On receiving the input confirming the wish to handover the object to second user 106b, the object scan data is processed by the content rendering module 102 in a step S312.

Configuration details for the second computing device 104b may be used by the content rendering module 102 to determine that a different format (from the one used to transmit the object scan data) may be needed for rendering the graphical representation of the object in the augmented reality environment implemented by the second computing device 104b.

The processing of the object scan data then converts the object scan data into a format which may be suitable for rendering the scanned object in the augmented reality environment generated by the second computing device 104b. This may, for example, mean that the object scan data is initially generated (in step S306) and transmitted in, for example, .obj format but is then converted into, for example, fbx format, if that is the format which is preferred by the second computing device 104b and the software which implements the augmented reality environment on that device. In other words, the content rendering module 102 may determine that a different rendering engine is used by the second computing device 104b to implement the augmented reality environment and convert the format of the data used to render the visual representation of the scanned object accordingly.

The content rendering module 102 also obtains data indicating user 106b is the user with which the games controller is to be shared, i.e. identification data for user 106b. This can be used by content rendering module 102 to identify the augmented reality environment in which the games controller is to be shared. The content rendering module 102 may use the IP address of second computing device 104b to identify the augmented reality environment into which the object is to be shared. Other data which can be used to identify the second computing device 104b may also be used to identify the second computing device 104b. Step S310 may be omitted as the confirmatory step may be carried out in step S302 where the initial identification of second user 104b is initially made by first user 104a.

Alternatively, responsive to identification of user 106b in step S308, an indicia may be rendered in the augmented reality environment which identifies a representation of a portal 130. In order to indicate that the user wishes to share the games controller 112, the games controller 112 can simply be moved toward the representation of the portal.

The object tracking sensor module 118 may be utilised to track the movement of the games controller 112 toward the portal 130 and, when the games controller 112 is located at the portal it may be interpreted by the computing device 104a as a confirmation of the desire to share with user 106b. That is to say, the games controller 112 may be carried by user 106a toward portal 130 and this can be interpreted as input confirming the desire to share the object with user 106b, i.e. the second user.

Alternatively or additionally, a visual indication may be rendered around the graphical representation of the games controller 112 prior to the confirmation of the desire to share the object. The visual indication may comprise a coloured portion highlighting the object or an animation.

That is to say, input is received at the content rendering module 102 which requests that the games controller 112 is transferred to the augmented reality environment implemented by computing device 104b so that it can be shown to the second user 106b. The input comprises the processed scan data for the games controller 112 which identifies the shape and dimensions of the object. The processed scan data can be used to render the scanned object in another augmented reality environment. The input also identifies the augmented reality environment implemented by the second computing device 104b. The input may also comprise the data needed to generate the graphical representation of the object. The input received at the content rendering module 102 may also comprise a request to transfer control of a gaming environment implemented by the content rendering module 102 from first user 104a to second user 104b.

The scan data and the identification data can then be used by the content rendering module 102 to identify the augmented reality environment in which the games controller is to be shared. A representation of the portal can also be generated and rendered in the augmented reality environment generated by computing device 104b. A prompt may be provided in the augmented reality environment generated by computing device 104b to ask the user 106b whether they want to receive the object.

That is to say, based on the identification of the object and the second augmented reality environment, a rendering data set can be generated.

The processed object scan data (in whichever suitable format) and the identification data which identifies the second computing device 106b are combined to provide a rendering data set. The rendering data set is then provided to the second computing device 104b as output from the content rendering module 102. It can be transmitted to the second computing device 104b using any suitable transmission medium or protocol. The rendering data set can then be used to render the representation of scanned object in the augmented reality environment by computing device 104b in a step S314.

The processed object scan data enables a graphical representation of the object to be rendered in the augmented reality environment implemented by the second computing device 106 as it comprises the data needed to identify the shape and dimensions of the object. It may also comprise further data which identifies aesthetic aspects of the graphical representation such as the colour being used or any animation which is used as part of the graphical representation such as in-game elements or user specified elements.

The graphical representation of the games controller 112 is then rendered in the augmented reality environment implemented by computing device 104b. Alternatively or additionally, the graphical representation of the games controller 112 may be seen by both of the users or only one of the users. This is step S316. The rendering of the portal 130 in both of the augmented reality environments may then be deleted from the respective environments. The graphical representation may also be determined by a user profile associated with the second user 106b.

The size and/or dimension of the portal 130 in the augmented reality environment implemented by computing device 104b may be determined by a user profile associated with the second computing device 104b. The size and/or dimension of the portal may be determined by the content rendering module 102.

In either of the augmented reality environments being described above, the portal 130 may provide a bound on the size of the object being transferred. The content rendering module 102 may limit the volume of the scanned object and/or the dimensions of the physical object and it is may use these limitations to impose a threshold on the volume and/or dimensions of the scanned object. Requests to transfer objects which exceed any one of these thresholds may generate a rejection of the request to transfer the object. These thresholds may also determine the size of the portal 130. Attempts to transfer an object which exceed the volume and/or dimension thresholds may generate a change in colour or texture of the portal. Attempts to transfer an object which exceed the volume and/or dimension thresholds may generate a rejection prompt which can be provided through visual or audible prompt by the respective computing device, i.e. the one where the request is received.

On rendering of the games controller 112 in the augmented reality environment implemented by computing device 104b, the content rendering module 102 may then register a transfer of the control of the gaming environment from the controller 112 by the first user 106a to the corresponding controller handled by the second user 106b. The inputs to the gaming environment, previously provided by the controller 112 held by the first user 106a, are then received from the controller held by the second user 106b. That is to say, functionality associated with the games controller 112 may then be transferred between the augmented reality environments which are used by the first and second users. Alternatively or additionally, if the games controller 112 is in communication with a games console to register inputs in the gaming environment, which are then implemented by the content rendering module 102, the content rendering module 102 may transmit a message to the games console to provide the instruction that inputs to the gaming environment should be restricted from games controller 112. A message may also be transmitted to a corresponding console used by second user 106b to request that activates functionality to enable it to accept inputs from the corresponding games controller used by the second 106b.

Alternatively or additionally, the visual indication which may be rendered around the graphical representation of the games controller 112 prior to the confirmation of the desire to share the object may also be removed after the graphical representation has been rendered in the augmented reality environment implemented by computing device 104b.

The graphical representation of the games controller 112 may be cancelled in the augmented reality environment implemented by first computing device 104a after the graphical representation of the games controller 112 has been rendered in step S316.

Prior to the rendering of the graphical representation of the games controller 112 in the augmented reality environment the second user may be prompted to identify their own games controller for scanning using the object detection sensor module 122 at the computing device 104b. On identification of the games controller 112 and subsequent scanning, the graphical representation of the games controller generated and rendered in step S306 can also then be rendered in the augmented reality environment and the object tracking sensor module 128 in computing device 104b used to synchronise the rendering of the graphical representation of the games controller 112 with the games controller provided by the second user 106b so that the graphical representation of the games controller 112 is always in the same place as the games controller provided by the second user of computing device. Alternatively, the graphical representation of games controller 112 may be rendered independently of the games controller used by the second user 106b.

Steps S300 to S316 can also be used to generate a representation of a games controller used by the second user, i.e. the user of computing device 104b, i.e. user 106b, and shared with user 106a.

That is to say, content rendering module 102 enables a representation of a physical object, such as a games controller (as an example of a physical object), to be shared between augmented reality implemented environments so that the representation can be visualised in both environments and seen by users who may be sharing an augmented reality implemented entertainment environment.

The content rendering module 102 also enables aspects of functionality to be transferred across augmented reality environments.

Whilst the steps S300 to S316 are described in the context of a games controller, this is not to be taken as a limitation on the physical object which can be scanned. A visual representation can be generated for any physical object (content rendering module permitting) and used to transfer the object into a further augmented reality environment.

Additionally or alternatively, the request to transfer an object from a first augmented reality environment into another augmented reality environment may comprise a request to transfer the object into more than a single augmented reality environment.

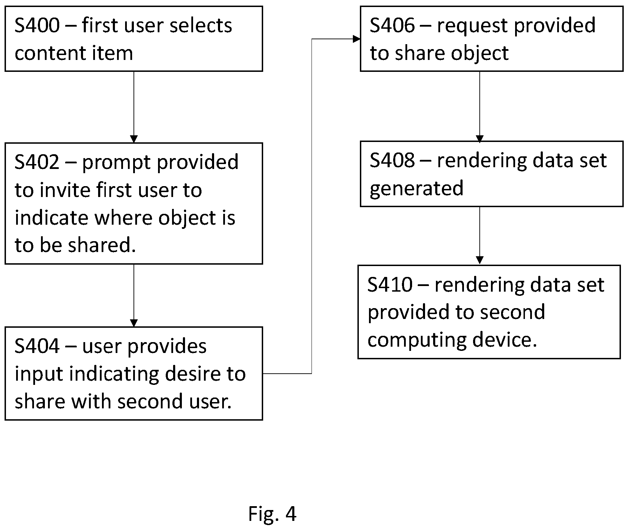

We now describe another example, with reference to Figure 4, where the shared object is not a physical object but rather a virtual object (e.g. a rendering of content) rendered in one augmented reality environment which user 104a desires to share with user 104b in a second augmented reality environment. The virtual object may be rendered in the respective augmented reality environment using object scan data which is generated as a result of scanning a physical object. That is to say, the virtual object may be a graphical representation of a physical object previously scanned using the object detection sensor module 116.

In a step S400, first user 106a selects a content item which is rendered inside the augmented reality environment which is to be shared with second user 106b. Such a content item may be a rendering of, for example, a video feed or a received message. The selection of the content item may be implemented using hand tracking techniques to track the movement of the hand toward the rendering of the content item in the augmented reality environment implemented by computing device 104a. As the content item is already rendered in the augmented reality environment, content rendering module 102 already has the data needed to render the object in the respective augmented reality environment and so does not need to re-generate this data. The data may also comprise additional data which corresponds to selectable links or controls for the object. For example, if the content item is a video from a social media website, data corresponding to the selectable links which enable the playback of the video may also be included.

Responsive to the movement of the hand of first user 106a toward the content item, a menu may be generated in a step S402 which provides share options. The share options detail the list of other users for whom the augmented reality environments have been rendered (including second user 106b). A prompt is provided which asks the first user 106a where they would like to share the object.

In a step S404, the first user 106a provides a user input to indicate that they would like to share this object with second user 106b. This user input may be in the form of a voice command which is detected by the voice detection sensor module 114 of the computing device 104a. The voice command may be a specific command which comprises a wake-word such as "share" followed by some identifier such as a name of second user 106b or a number used to identify the second user 106b. That is to say, handover data can be generated which identifies user 106b as a user with which the object is to be shared.

A request is then transmitted to content rendering module 102 for the object to be shared with second user 106b. The request comprises the handover data and an identification of the object. This is step S406.

This enables the content rendering module 102 to identify the object (and thus the data needed to render the object) and the augmented reality environment where the object is to be transferred. The content rendering module 102 may then retrieve the data which it needs to identify the second computing device 104b, e.g. an IP address. The content rendering module 102 may also receive the data which is used to render the object in the augmented reality enviromment. This will comprise data corresponding to the content item itself but also the data corresponding to the controls and links associated with the content item.

The content rendering module 102, on receiving the request in step S406, generates a rendering data set, in a step S408. The rendering data set comprises the data needed to render the virtual object in the augmented reality environment generated by second computing device 104b and the data needed to render links corresponding to controls or other functionality associated with the virtual object. The rendering data set also identifies the second computing device 104b using any suitable means. An example would be an IP address.

The rendering data set is then provided to the computing device 104b so that it can be used to render the shared object in the augmented reality environment by computing device 104b. This is step S410. The shared object can then be rendered in the augmented reality environment so that it can be seen by second user 106b.

That is to say, in accordance with the second example, a virtual object (e.g. a content item) may be shared between augmented reality environments so that users can share objects from their own augmented reality environment into another user's augmented reality environment. Additionally, any associated functionality may also be shared between the augmented reality environments.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as whole. In the present specification, "comprises" means "includes or consists of' and "comprising" means "including or consisting of". The singular reference of an element does not exclude the plural reference of such elements and vice-versa. The invention may be implemented by means of hardware comprising several distinct elements, and by means of a suitable programmed computer. In a device claim enumerating several means, several these means may be embodied by one and the same item of hardware. The mere fact that certain measures are recited in mutually different dependent claims does not indicate that a combination of these measures cannot be used to advantage.

## Claims

1. A computer implemented method of enabling an object to be shared between a plurality of augmented reality environments, the method implemented by a processing resource, the method:
receiving input requesting that an object in a first augmented reality environment is transferred to at least one further augmented reality environment;
identifying the object and the at least one further augmented reality environment;
based on the identification of the object and the at least one further augmented reality environment, generating rendering data for the object;
providing the rendering data to the at least one further augmented reality environment.

2. The method of Claim 1 wherein the at least one further augmented reality environment shares a plurality of visual aspects with the first augmented reality environment.

3. The method of any preceding claim, wherein the input comprises a request to transfer functionality associated with the object to the at least one further augmented reality environment and the method further comprises transferring the functionality associated with the object to the at least one further augmented reality environment.

4. The method of Claim 3, wherein the functionality comprises control over input to a computer-implemented entertainment environment implemented using the respective augmented reality environments.

5. The method of any preceding claim, generating rendering data for the object comprises:
processing data associated with the object; and
generating data in a format suitable for rendering in the at least one further augmented reality environment;
combining the data suitable for rendering in the least one further augmented reality environment with data identifying the at least one further augmented reality environment.

6. The method of Claim 5, wherein the data associated with the object comprises data associated with functionality of the object.

7. The method of any preceding claim, wherein the object is a physical object.

8. The method of any one of Claims 1 to 6, wherein the object is a virtual object.

9. A method of transferring an object between augmented reality environments, the method implemented by a processing resource, the method comprising:
receiving input via a user interface requesting transfer of an object from a first augmented reality environment to at least one further augmented reality environment;
identifying the object to be transferred;
generating a request for the object to be transferred to the at least one further augmented reality environment;
transmitting the request for the object to be transferred to the at least one further augmented reality environment.

10. The method of Claim 12, wherein the input comprises identification of at least one user corresponding to the at least one further augmented reality environment; and/or
, wherein the object is a physical object, the method further comprising: scanning the object to generate object scan data corresponding to the object.

11. The method of any one of Claims 9 to 10, wherein the method further comprises generating a visual representation for the object.

12. The method of any of Claims 9 to 11, wherein the visual representation is determined by a user profile associated with one of the plurality of augmented reality environments.

13. A system configured to implement any one of Claims 1 to 12.

14. A computer readable medium comprising instructions which, when executed by a processing resource, configure a computer to implement the method of any one of Claims 1 to 12.

15. A computer program comprising instructions which, when executed by a processing resource, configure a computer to implement the method of any one of Claims 1 to 12.
